# FASCICULE DE BREVET EUROPEEN

(11) **EP 4 263 094 B1**
(45) Date de publication et mention de la délivrance du brevet: **02.04.2025**
(21) Numéro de dépôt: 21854737.0
(22) Date de dépôt: 13.12.2021
(51) Int. Cl.: B23B 3/26, B23B 29/24

(54) **UNITÉ D'USINAGE A TÊTE ROTATIVE**
DREHKOPFBEARBEITUNGSEINHEIT
ROTARY-HEAD MACHINING UNIT

(30) Priorité: 21.12.2020 CH 16332020
(43) Date de publication de la demande: 25.10.2023
(73) Titulaire: Esco S.A., 2206 Les Geneveys-sur-Coffrane (CH)
(72) Inventeur: PIGUET, Pierre-Louis, 2206 Les Geneveys-sur-Coffrane (CH); ESPOSITO, Antonio, 2206 Les Geneveys-sur-Coffrane (CH)
(74) Mandataire: Omnis-IP
(86) Numéro de dépôt international: PCT/CH2021/000004
(87) Numéro de publication internationale: WO 2022/133615

(56) Documents cités:
- EP-A1- 0 869 858
- EP-A1- 2 170 544

## Description

### Domaine technique

La présente invention concerne une unité d'usinage à tête rotative portant au moins deux outils pivotants, pour l'usinage d'une pièce non rotative centrée sur l'axe de rotation de la tête rotative, comportant un bâti sur lequel est monté un rotor supporté par l'intermédiaire de deux roulements extérieurs, ledit rotor étant pourvu d'un conduit axial et, couplé à des moyens d'entraînement en rotation, des moyens de guidage axial de ladite pièce non rotative, ces moyens étant portés par des paliers dans le rotor et par le support fixe, des moyens pour maintenir et déplacer axialement ladite pièce, non rotative, au moins deux supports d'outils, montés dans ladite tête rotative de manière à pivoter autour d'axes respectifs parallèles à l'axe de rotation, chaque support comportant un levier de commande disposé transversalement, des moyens de commande de pivotement, coopérant avec ledit levier et comprenant un élément de commande, qui est mobile en translation axiale dans le rotor et couplé à un dispositif de commande de translation, et des paires d'organes d'appui disposés respectivement sur chaque levier de commande et sur l'élément de commande correspondant, chaque paire d'organes d'appui comprenant une surface directrice et une surface d'appui s'appuyant contre la surface directrice dans une position variable en fonction de la translation dudit élément de commande, ladite surface directrice se trouvant sur le support d'outil et la surface d'appui correspondante se trouvant sur l'élément de commande, et chaque surface directrice correspondant à un support d'outil pivotant ayant la forme d'une portion d'hélice dont l'axe coïncide avec l'axe de pivotement dudit support.

### Technique antérieure

La tête d'usinage de ce type décrite dans le brevet européen N° EP 0 869 858 comporte une broche porte-outils équipée de deux outils couplés, la paire d'outils étant commandée par un axe numérique. Dans cette même invention, l'avancement de la pièce à usiner est réalisé par deux disques profilés enserrant la pièce à usiner, l'un étant entraîné par le moteur d'axe et l'autre porté par un arbre assurant le serrage de la pièce à usiner.

Dans les systèmes de l'art antérieur, la pièce à usiner est serrée par une pince dans le système d'avancement. Lorsque le diamètre de la pièce à usiner devient plus petit que 1 à 1.5 mm environ, toute résistance due à l'usinage peut provoquer un flambage de la pièce à usiner entre la pince servant à l'avancement et le système de guidage appelé canon, sachant que la distance minimale entre ces deux éléments doit correspondre au moins à la longueur de la pièce à usiner. L'avancement par disque tournant permet d'avoir une distance courte et fixe entre le système d'avancement et le guidage, ce qui autorise l'usinage de pièce à usiner de quelques dixièmes de millimètres de diamètre.

L'usinage de pièce à usiner de petite dimension impose aussi de prendre en compte la torsion induite par l'effort de coupe : plus la distance entre le système d'avancement, qui assure aussi le maintien en rotation et l'outil est grande, plus la rigidité en torsion est faible et peut nuire à l'usinage. Enfin, plus le système de guidage est long, plus il est onéreux à réaliser.

Ces considérations ont conduit aux têtes d'usinage rotatives actuelles, utilisant des guidages relativement courts (env. 100 mm), mais dont le nombre d'outils est limité à deux.

Les solutions trouvées actuellement pour équiper de telles têtes de plus de deux outils nécessitent toutes une construction en longueur, ce qui les rend inapplicables dans le cas qui nous concerne.

### Exposé de l'invention

La présente invention propose une solution à ce problème, en permettant de réaliser dans le même espace que les têtes d'usinage actuelles, des têtes pouvant porter jusqu'à quatre outils sélectionnables durant le cycle d'usinage, sans nécessiter l'arrêt de la rotation.

Ce but est atteint par l'unité d'usinage ayant les caractéristiques de la revendication 1 selon l'invention, caractérisée en ce qu'elle comporte une douille de commande montée coaxialement sur ladite broche, cette douille étant agencée pour coulisser axialement et pour occuper une première position avancée, une deuxième position reculée, cette douille portant à l'une de ses extrémités une surface de commande de forme ellipsoïdale, agencée pour coopérer avec les surfaces directrices hélicoïdales et pour effectuer la plongée des outils, des moyens pour déplacer axialement ladite douille de commande et un dispositif de déphasage agencé pour amener ladite douille de commande dans deux, trois ou quatre positions angulaires prédéterminées autour de son axe.

Selon un mode de réalisation préféré, les moyens pour déplacer la douille de commande comportent deux tiges entraînées par un actuateur linéaire monté en retrait du bâti supportant la tête d'usinage.

De façon préférentielle, les deux tiges agissent sur un boîtier monté sur la douille de commande par l'intermédiaire de deux roulements à billes à contact oblique préchargés.

Selon une forme de réalisation particulièrement avantageuse, le système de déphasage est réalisé électroniquement. Il est constitué de deux moteurs d'entraînement séparés, l'un pour le rotor et l'autre pour la douille de commande. Chaque moteur est équipé d'un système de mesure de sa position angulaire. Une fonctionnalité particulière de la commande numérique permet de commander les deux moteurs de manière à ce que leur rotation soit parfaitement synchrone, mais aussi qu'il soit possible pendant la rotation de commander un décalage angulaire de l'un par rapport à l'autre. Le choix de cette solution permet de renoncer totalement à un système mécanique complexe et onéreux et simplifie grandement la construction. Il est le résultat d'un examen approfondi des possibilités techniques, ainsi que d'une analyse prévisionnelle des coûts des différentes versions.

### Description sommaire des dessins

La présente invention et ses principaux avantages apparaîtront mieux dans la description des différents modes de réalisation, en référence aux dessins annexés, dans lesquels :

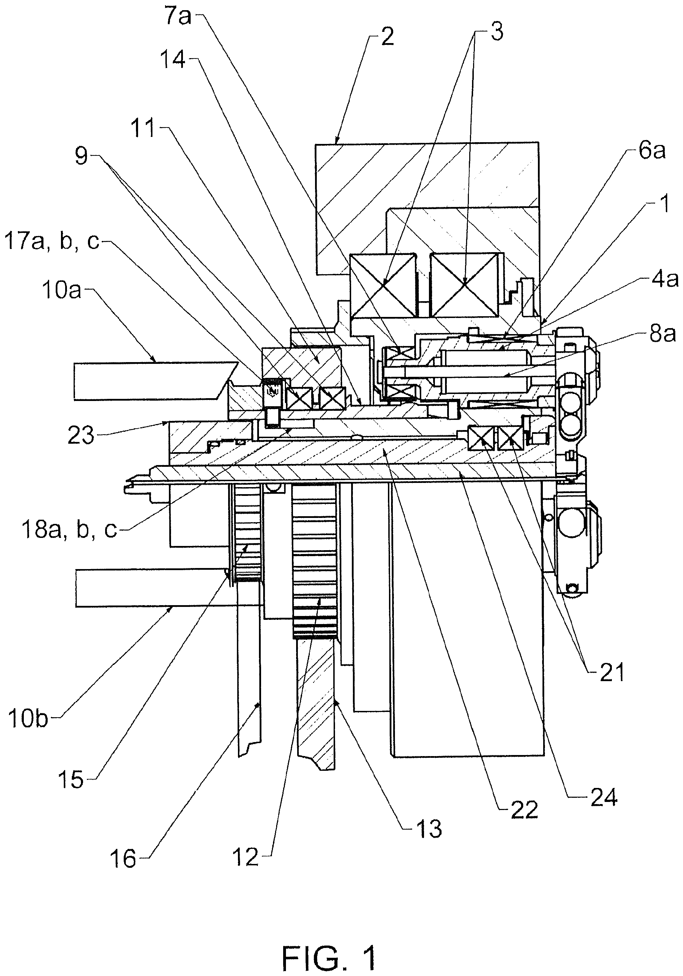

La figure 1 est une vue en coupe axiale de l'unité d'usinage selon l'invention, montrant les différents paliers et la construction interne des axes porte-outils.
La figure 2A illustre les moyens de déplacement axial de la douille de commande.
La figure 2B représente en vue de face une version à trois porte-outils à 120 degrés.
La figure 3A illustre la construction d'un axe porte-outils parmi les trois identiques.
Les figures 3B et 3C représentent des vues partielles de la douille de commande coulissant sur le rotor, en montrant les éléments participants au guidage longitudinal de la douille sur le rotor.
Les figures 4A illustre la douille de commande en position arrière.
La figure 4B montre son effet sur le porte-outil référencé, soit une position dégagée.
La figure 4C montre dans un plan de coupe identique à la figure 4A la douille de commande en position avancée.
La figure 4D montre son effet sur le porte-outil référencé, soit une position de plongée maximale dans la pièce à usiner.
La figure 5 est une vue en coupe transversale de l'unité d'usinage à trois outils selon l'invention, qui montre les trois axes porte-outils ramenés en position dégagée par les ressorts de rappel, lorsque la douille est complètement reculée.
Les figures 6A et 6B illustrent la correspondance entre la position du premier porte-outil, en plongée maximum, la position angulaire de la surface de contact ellipsoïdale sur la douille de commande, ainsi que le pivotement du levier solidaire de l'axe porte-outil.
Les figures 7A, 7B et 8A, 8B illustrent la même situation pour les deuxième et troisième axes porte-outils respectivement, et

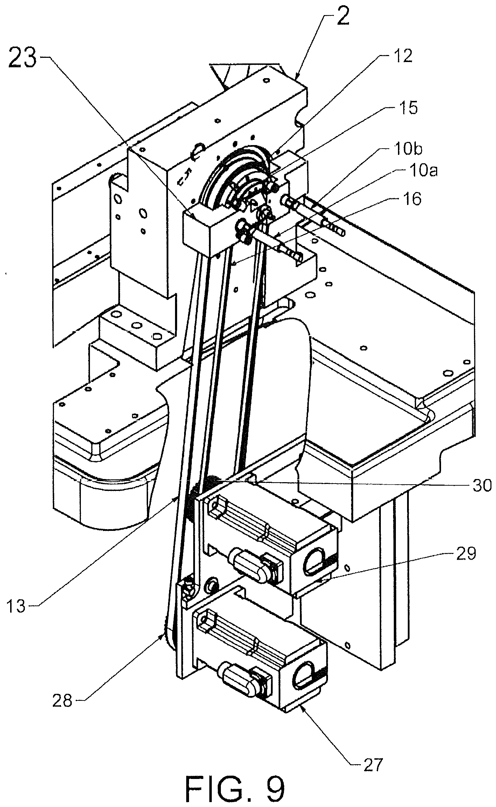

La figure 9 illustre la construction du système de déphasage électronique.

### Meilleures manières de réaliser l'invention

En référence aux figures, la broche à trois outils est constituée d'un rotor 1 porté par une paire de roulements 3, le tout étant monté dans un carter 2. L'entraînement en rotation se fait par la courroie crantée 13 engrenant sur la poulie crantée 12.

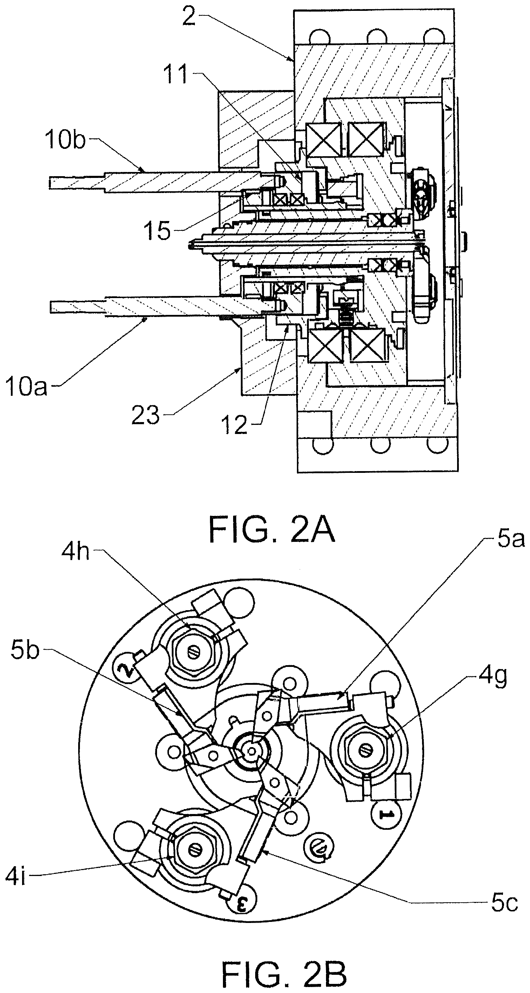

Au centre de la broche se trouve un tube 22, non rotatif qui est supporté à une extrémité dans le support fixe 23 qui sert aussi de guide aux tiges de commande 10a, 10b de la figure 2A, et supporté à l'autre extrémité par une paire de roulements de précision 21 logés dans le rotor 1. C'est à l'intérieur de ce tube que sont glissés les canons de guidage 24 ajustés précisément au diamètre de la pièce à usiner.

Dans ce rotor sont monté trois axes porte-outils 4a, 4b, 4c, tous identiques. Sur chaque extrémité extérieure à la broche, un six pans 4g, 4h, 4i permet le montage de différents supports d'outils de coupe 5a, 5b et 5c. Chaque partie arrière en forme de levier 4j, 4k, 4l supporte la portion d'hélice 4d, 4e, 4f qui sera en contact avec la douille de commande.

Chaque axe est supporté radialement par deux paliers à aiguilles 6a, 6b, 6c et 7a, 7b, 7c ; le jeu axial se règle avec les éléments 8a, 8b, 8c.

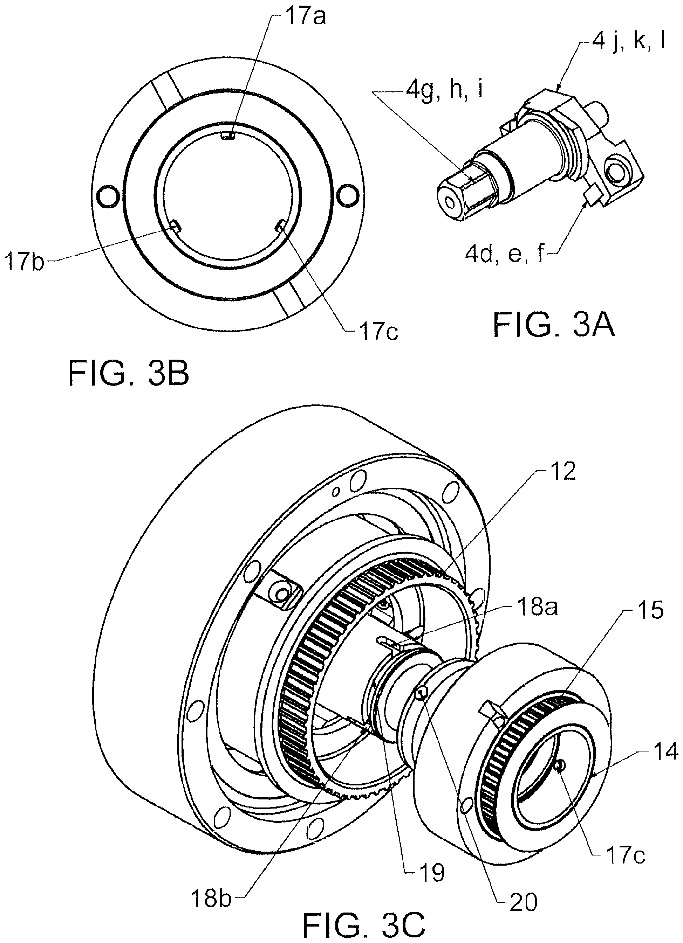

Le mouvement axial des tiges de commande 10a, 10b est transmis à la bobine 11. La paire de roulements 9 assure la liaison entre la bobine 11 non rotative et la douille de commande rotative 14, qui coulisse sur la queue du rotor 1 et tourne avec lui. Cette douille dispose de son propre entraînement en rotation via la courroie 16 et la poulie 15. Trois piges 17 a, 17b, 17c, sont solidaires de la poulie 15 et de la douille 14 et situées à 120° l'une de l'autre (FIG 3B et 3C). En position axiale reculée de la douille de commande 14, elles débouchent dans la rainure radiale 19 située dans le rotor 1; dans cette position, le déplacement angulaire de la douille 14 par rapport au rotor 1 est possible, car les piges 17 a, 17b, 17c sont libres dans la gorge 19.

Dans le rotor 1 sont aussi prévues trois rainures longitudinales 18a, 18b, 18c, usinées à 120°. Pour trois positions angulaires de la douille 14, les piges 17a, 17b, 17c vont se trouver vis-à-vis de ces rainures ; il est alors possible de faire avancer la douille 14 via les tiges de commandes 10a et 10b, et ainsi de faire plonger un des outils. En effet, en faisant avancer la douille 14, le point de contact 20 va entrer en contact avec la portion d'hélice 4d ou 4e ou 4f du porte-outil sélectionné 1, 2, 3, et donc provoquer un pivotement de l'axe 4a, 4b, 4c et ainsi faire pénétrer l'outil sélectionné dans la pièce à usiner.

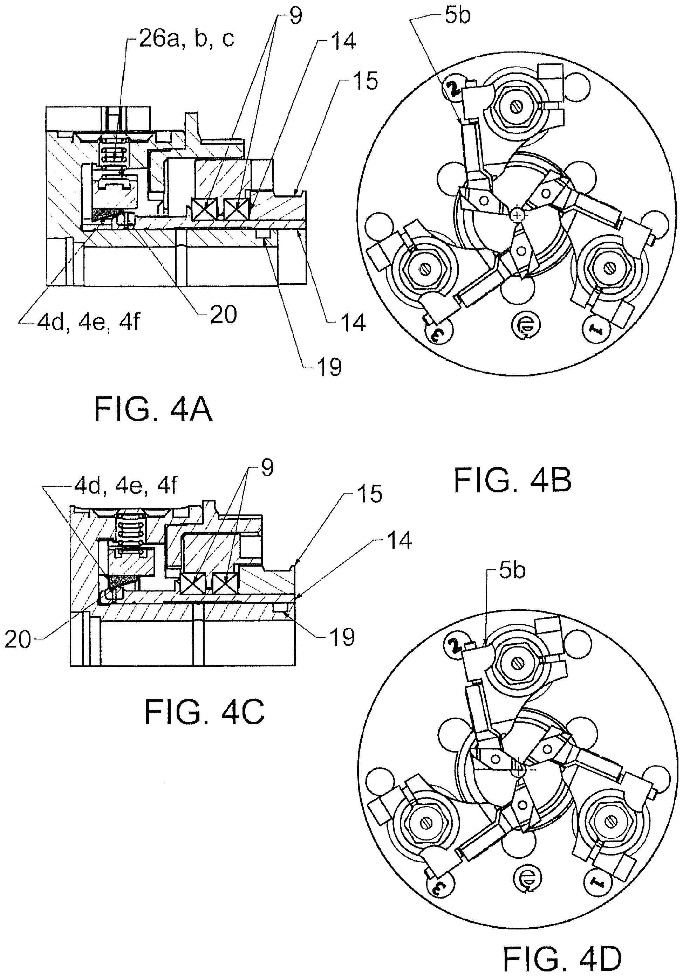

Les figures 4A à 4D illustrent cette fonctionnalité pour le porte outil 2. La figure 4A montre en coupe la douille de commande 14 en position reculée, qui correspond à une position dégagée de la pointe de l'outil 2 visible sur la figure 4B. Sur la figure 4C, la douille 14 est complètement avancée, et sur la figure 4D, cette position de la douille de commande 14 a fait foncer la pointe de l'outil 2 au-delà de l'axe de la broche, et donc de la pièce à usiner.

Dans la construction choisie, sur chaque axe porte-outil 4a, 4b, 4c, un ressort 26a, 26b, 26c maintient le contact de la portion d'hélice 4d, 4e, 4f avec le point 20 de la douille, même en cas de recul de la douille.

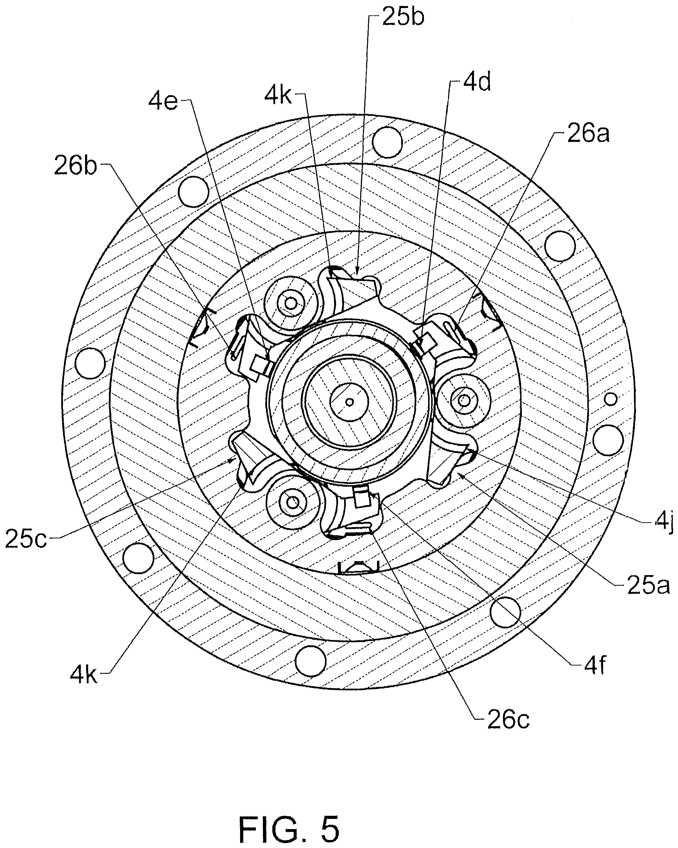

Cependant, en position reculée maximale de la douille 14, un bossage 25a, 25b, 25c sur le rotor 1 sert de butée à chaque axe porte-outil 4a, 4b,4c selon la figure 5. Il limite ainsi le débattement angulaire des axes lors du recul maximal de la douille 14. Dans cette position axiale de la douille 14, il n'y a plus aucun contact entre les portions d'hélice 4d, 4e, 4f et le point de contact 20 de la douille 14. Cette position amène aussi les piges 17a, 17b, 17c dans une position correspondant à la rainure 19. Ces deux conditions rendent possible la rotation libre de la douille 14 par rapport au rotor 1, sans risque d'abîmer le point de contact 20 ni les hélices 4d, 4e, 4f.

En résumé, en position reculée, la douille 14 peut être tournée librement par rapport au rotor 1. Après avoir positionné angulairement la douille 14 de telle manière que les trois piges 17a, 17b, 17c se trouvent en face des rainures longitudinales 18a, 18b, 18c, ce qui correspondant à trois possibilités toutes espacées de 120°, il est possible de faire avancer la douille 14 et donc de faire plonger l'outil sélectionné.

En effet, chacune de ces trois positions angulaires permet, en déplaçant axialement la douille 14, la mise en contact du point 20 avec la portion d'hélice 4d ou 4e ou 4f de l'un des trois différents porte-outils. Elle rend ainsi possible la plongée de l'outil choisi de sorte que la sélection d'outil est donc réalisée.

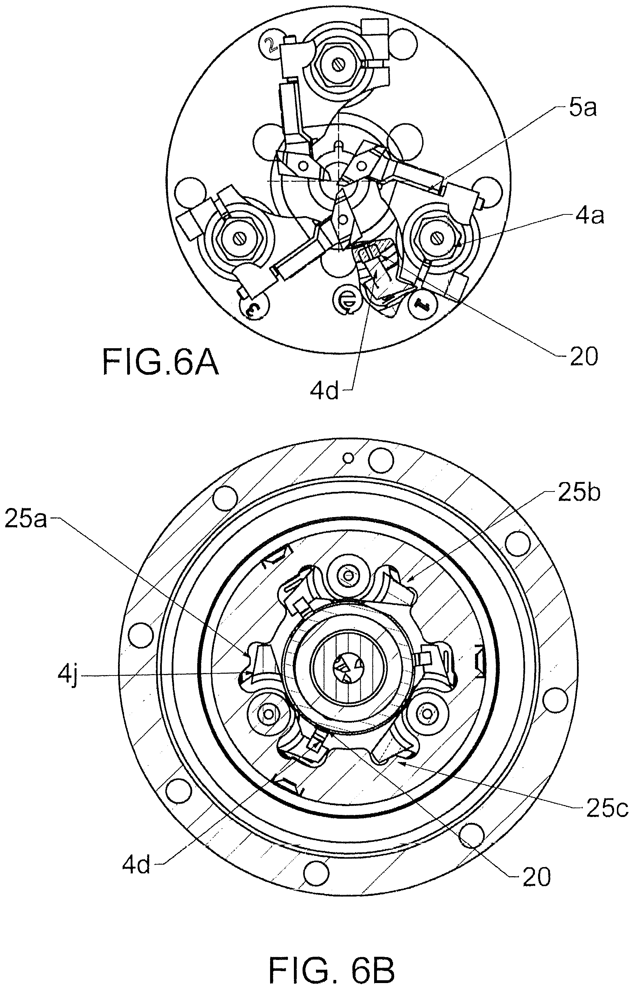

Les figures 6A et 6B illustrent le cas du premier axe porte-outil dont la pointe est complètement plongée. Pour ce faire, le point de contact 20 a été amené en regard de la portion d'hélice 4d de l'axe no 1 et la douille 14 poussée en avant. On voit sur la figure 6B que le levier 4j est bien décollé de la butée 25a. Par contre, on voit que les deux autres axes sont eux en appui sur leur butée respective 25b et 25c.

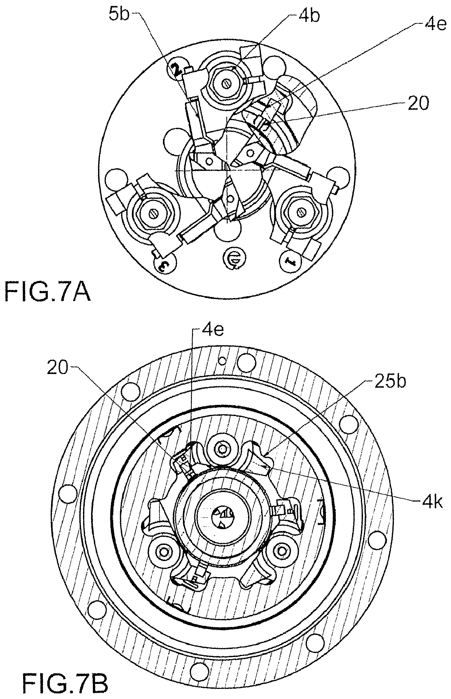

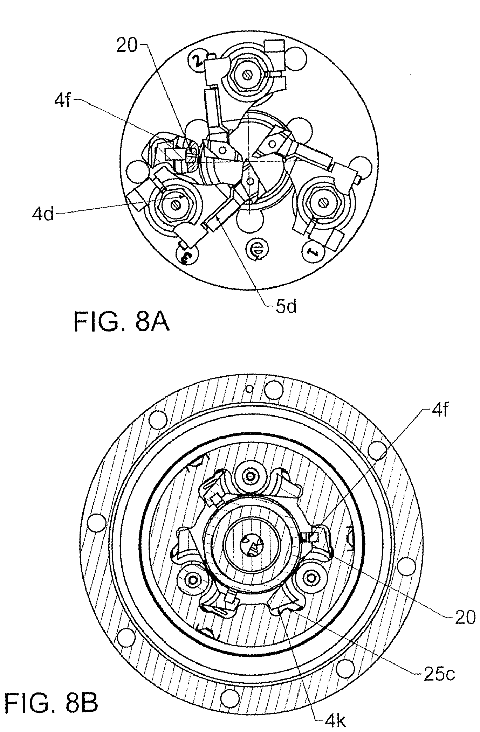

Les figures 7A et 7B, respectivement 8A et 8B illustrent les cas des deuxième et troisième porte-outils, avec la pointe d'outil dans une position analogue à celle de la figure 6A. On peut bien noter sur les figures 7B et 8B les différentes positions angulaires du point de contact 20 dans chaque cas et le fait que seul l'axe commandé est décollé de sa butée.

Lorsque les piges sont engagées dans les rainures 18a, b, c, le déphasage n'est plus possible, les piges 17a, 17b, 17c servant alors de guidage longitudinal.

Dans le système de déphasage électronique, chacune des courroies 13 et 16 est entraînée par un moteur séparé, 27 respectivement 29, portant chacun une poulie crantée 28, respectivement. 30. Le rapport de transmission moteur/broche doit être de préférence entier ; dans un cas particulier, le rapport choisi est égal à 1. Chaque moteur dispose d'un codeur électronique mesurant sa position angulaire et fournissant un index de référence une fois par tour. Le système de contrôle électronique (CNC) permet d'entraîner les deux éléments de broche de manière parfaitement synchrone, le moteur 29 calquant à tout instant sa position angulaire sur celle du moteur 27. Il dispose aussi d'instructions permettant de commander au moteur 29 de décaler sa position angulaire d'une valeur définie par rapport à celle du moteur 27, et ceci pendant que la broche travaille, c'est-à-dire avec les deux moteurs en rotation.

Cette fonctionnalité rend ainsi possible, pendant la rotation de la broche, le libre choix de travailler avec l'un des trois porte-outils 4a ou 4b ou 4c.

Elle autoriserait sans autre la réalisation d'une broche avec deux ou quatre porte-outils au lieu de trois, car il n'y a pas de limite au nombre de positions programmables.

Les avantages prévus par l'unité d'usinage selon l'invention par rapport au système de l'art antérieur sont les suivants :
Le point déterminant est la disposition particulière des roulements principaux 3. Elle apporte de gros avantages en termes de rigidité et de capacité de charge. Elle permet aussi d'avoir un point de graissage spécifique pour les roulements 3, qui garantit une maîtrise absolue de la quantité de lubrifiant apportée, et donc de la température et des conditions de fonctionnement de la broche.

Elle permet aussi d'envisager un changement aisé des roulements 21 du tube support canon 22, roulements qui sont les plus exposés aux copeaux et aux forces d'usinage.

Elle permet de prévoir un changement facilité et complet de cette partie centrale recevant le canon de guidage. Il en résulte la possibilité d'utiliser sur la même broche différents types de canon de guidage ; le système de l'art antérieur, mais aussi des canons de guidage du commerce, réglables, et utilisés sur des décolleteuses standard à barre tournante. C'est aussi une ouverture vers toute évolution future dans les systèmes de guidage de pièce à usiner.

Cet agencement permet enfin d'amener simplement de l'huile de coupe au travers du canon de guidage jusque sur les outils, sans devoir passer au travers du rideau que constituent les outils tournants passant devant le jet.

Les caractéristiques précédentes peuvent s'appliquer sans autre à la réalisation d'une broche à deux outils commandés selon l'art antérieur. Elles constituent à elles seules un saut technologique important.

Mais ces modifications rendent aussi possible la réalisation d'une broche utilisant un système de décalage angulaire piloté de la douille de commande des outils par rapport à la broche, ceci pendant la rotation. Il est ainsi envisageable de réaliser des broches courtes à deux, trois ou même quatre outils, limite fixée par l'utilisation d'un système de porte-outils pivotants.

La solution décrite est celle de trois outils ; la version à deux outils par décalage angulaire commandé n'apporte aucun avantage significatif par rapport à la solution classique. Avec trois outils, le gain est bien plus intéressant, tout en gardant une disposition pas trop serrée par rapport à la version à quatre outils. Il y a plus de liberté dans les formes des porte-outils et aussi plus de place pour l'évacuation des copeaux.

## Revendications

1. Unité d'usinage à tête rotative portant au moins deux outils pivotants, pour l'usinage d'une pièce non rotative centrée sur l'axe de rotation de la tête rotative, comportant un bâti (2) sur lequel est monté un rotor (1) supporté par l'intermédiaire de deux roulements extérieurs (3), ledit rotor (1) étant pourvu d'un conduit axial et, couplé à des moyens d'entraînement en rotation (12) et (15), des moyens de guidage axial de ladite pièce non rotative (22) et (24), ces moyens étant portés par des paliers (21) dans le rotor (1) et par le support fixe (23), des moyens pour maintenir et déplacer axialement ladite pièce, non rotative, au moins deux supports d'outils (4a-4c), montés dans ladite tête rotative de manière à pivoter autour d'axes respectifs parallèles à l'axe de rotation, chaque support comportant un levier de commande (4j-4l) disposé transversalement, des moyens de commande de pivotement, coopérant avec ledit levier et comprenant un élément de commande (14), qui est mobile en translation axiale dans le rotor et couplé à un dispositif de commande de translation, et des paires d'organes d'appui disposés respectivement sur chaque levier de commande et sur l'élément de commande correspondant, chaque paire d'organes d'appui comprenant une surface directrice (4d-4f) et une surface d'appui (20) s'appuyant contre la surface directrice dans une position variable en fonction de la translation dudit élément de commande (14), ladite surface directrice (4d-4f) se trouvant sur le support d'outil et la surface d'appui correspondante (20) se trouvant sur l'élément de commande (14), et chaque surface directrice correspondant à un support d'outil pivotant ayant la forme d'une portion d'hélice dont l'axe coïncide avec l'axe de pivotement dudit support, **caractérisée en ce qu'**elle comporte une douille de commande (14) montée coaxialement sur ladite broche, ladite douille (14) étant agencée pour coulisser axialement et pour occuper une première position avancée, une deuxième position reculée, ladite douille de commande (14) portant à l'une de ses extrémités une surface de commande de forme ellipsoïdale (20), agencée pour coopérer avec les surfaces directrices hélicoïdales (4d-4f) et pour effectuer la plongée des outils, des moyens pour déplacer axialement ladite douille de commande (14) et un dispositif de déphasage agencé pour amener ladite douille de commande (14) dans deux, trois ou quatre positions angulaires prédéterminées autour de son axe.

2. Unité d'usinage à tête rotative selon la revendication 1, **caractérisée en ce que** le système de déphasage est constitué de deux moteurs d'entraînement séparés (27) et (29), l'un pour le rotor (1) via la poulie (28), la courroie (13) et la poulie (12), l'autre pour la douille (14) via la poulie (30), la courroie (16) et la poulie (15), chaque moteur étant équipé d'un système de mesure de sa position angulaire.

3. Unité d'usinage à tête rotative selon les revendications 1 et 2, **caractérisée en ce qu'**elle comprend des moyens de commande numérique qui permettent de commander les deux moteurs de manière à ce que leur rotation soit parfaitement synchrone, mais aussi qu'il soit possible pendant la rotation de commander un décalage angulaire quelconque de l'un par rapport à l'autre.

4. Unité d'usinage selon les revendications 1 et 2, **caractérisée en ce qu'**elle comprend des moyens qui permettent un changement complet de la partie centrale (22) et (21) recevant les moyens de guidage axial (24), autorisant ainsi le remplacement aisé des roulements (21) et l'adaptation éventuelle d'autres systèmes de guidage de la pièce à usiner, sans devoir modifier la broche elle-même.

5. Unité d'usinage selon les revendications précédentes, **caractérisée en ce que** dans le rotor sont montés trois axes portes outils (4a, 4b, 4c) tous identiques, dans lequel sur chaque extrémité extérieure à la broche, un six pans (4g, 4h, 4i) permet le montage de différents supports d'outils de coupe (5a, 5b, 5c).

6. Unité d'usinage à tête rotative selon la revendication 1, dans lequel chaque partie arrière en forme de levier (4j, 4k, 4l) supporte la portion d'hélice (4d, 4e, 4f) qui sera en contact avec la douille de commande (14).

7. Unité d'usinage à tête rotative selon les revendications précédentes, **caractérisée en ce que** chaque axe est supporté radialement par deux paliers à aiguilles (6a, 6b, 6c) et (7a, 7b, 7c) ; le jeu axial se réglant avec les éléments (8a, 8b, 8c).

8. Unité d'usinage à tête rotative selon les revendications précédentes, **caractérisée en ce que** le mouvement axial des tiges de commande (10a, 10b) est transmis à la bobine (11) et **en ce que** la paire de roulements (9) assure la liaison entre la bobine (11) non rotative et la douille de commande rotative (14), qui coulisse sur la queue du rotor (1) et tourne avec lui.

9. Unité d'usinage à tête rotative selon la revendication 8, **caractérisée en ce que** la douille de commande rotative (14) dispose de son propre entraînement en rotation via la courroie (16) et la poulie (15) et **en ce que** trois piges (17a, 17b, 17c) sont solidaires de la poulie (15) et de la douille (14) et situées à 120° l'une de l'autre.

10. Unité d'usinage à tête rotative selon la revendication 1, **caractérisée en ce que** les moyens pour déplacer la douille de commande (14) comportent deux tiges (10a et 10b) entraînées par un actuateur linéaire monté en retrait du bâti supportant la tête d'usinage.

11. Unité d'usinage à tête rotative selon la revendication 10, **caractérisée en ce que** lesdites deux tiges agissent sur un boîtier (12) monté sur la douille de commande (14) par l'intermédiaire de deux roulements à billes (9) à contact oblique préchargés.

## Patentansprüche

1. Bearbeitungseinheit mit rotierendem Kopf, der mindestens zwei schwenkbare Werkzeuge trägt, zur Bearbeitung eines nicht rotierenden Werkstücks, das auf der Rotationsachse des rotierenden Kopfes zentriert ist, das einen Rahmen (2) umfasst, auf dem ein Rotor (1) montiert ist, der über zwei Außenlager (3) getragen wird, wobei der besagte Rotor (1) mit einem axialen Kanal und, gekoppelt mit Mitteln zum rotierenden Antrieb (12) und (15), Mitteln zur axialen Führung des besagten nicht rotierenden Teils (22) und (24) versehen ist, wobei diese Mittel von Lagern (21) in dem Rotor (1) und von dem festen Halter (23) getragen werden, Mitteln zum Halten und axialen Bewegen des besagten nicht rotierenden Teils, mindestens zwei Werkzeughaltern (4a-4c), die in dem besagten rotierenden Kopf so montiert sind, dass sie um entsprechende Achsen parallel zur Rotationsachse schwenken, wobei jeder Halter einen quer angeordneten Steuerhebel (4j-4l), Schwenksteuermittel, die mit dem besagten Hebel zusammenwirken und ein Steuerelement (14) umfassen, das in axialer Translation in dem Rotor beweglich ist und mit einer Vorrichtung zur Translationssteuerung gekoppelt ist, und Paare von Stützelementen umfasst, die jeweils an jedem Steuerhebel und an dem entsprechenden Steuerelement angeordnet sind, wobei jedes Paar von Stützelementen eine Führungsfläche (4d-4f) und eine Stützfläche (20) umfasst, die abhängig von der Translation des besagten Steuerelements (14) in einer variablen Position an der Führungsfläche anliegt, wobei sich die besagte Führungsfläche (4d-4f) auf dem Werkzeughalter befindet und sich die entsprechende Stützfläche (20) auf dem Steuerelement (14) befindet, und wobei jede Führungsfläche einem schwenkbaren Werkzeughalter entspricht, der die Form eines Helixabschnitts hat, wobei die Achse mit der Schwenkachse des besagten Halters zusammenfällt, **dadurch gekennzeichnet, dass** sie eine Steuerhülse (14) umfasst, die koaxial auf der besagten Spindel montiert ist, wobei die besagte Hülse (14) so angeordnet ist, dass sie axial gleitet und eine erste vorgeschobene Position und eine zweite zurückgezogene Position einnimmt, wobei die besagte Steuerhülse (14) an einem ihrer Enden eine ellipsoidförmige Steuerfläche (20) aufweist, die so angeordnet ist, dass sie mit den spiralförmigen Führungsflächen (4d-4f) zusammenwirkt und das Eintauchen der Werkzeuge ausführt, Mittel zum axialen Bewegen der besagten Steuerhülse (14) und eine Phasenverschiebungsvorrichtung, die so angeordnet ist, dass sie die besagte Steuerhülse (14) in zwei, drei oder vier vorbestimmten Winkelpositionen um ihre Achse bringt.

2. Bearbeitungseinheit mit rotierendem Kopf nach Anspruch 1, **dadurch gekennzeichnet, dass** das Phasenverschiebungssystem aus zwei getrennten Antriebsmotoren (27) und (29) besteht, einer für den Rotor (1) über die Riemenscheibe (28), den Riemen (13) und die Riemenscheibe (12), der andere für die Hülse (14) über die Riemenscheibe (30), den Riemen (16) und die Riemenscheibe (15), wobei jeder Motor mit einem System zur Messung seiner Winkelposition ausgestattet ist.

3. Bearbeitungseinheit mit rotierendem Kopf nach den Ansprüchen 1 und 2, **dadurch gekennzeichnet, dass** sie numerische Steuermittel umfasst, die es ermöglichen, die beiden Motoren so zu steuern, dass ihre Rotation perfekt synchron ist, aber auch so, dass es möglich ist, während der Rotation jeden Winkelversatz des einen im Verhältnis zu dem anderen zu steuern.

4. Bearbeitungseinheit nach den Ansprüchen 1 und 2, **dadurch gekennzeichnet, dass** sie Mittel umfasst, die einen vollständigen Austausch des Mittelteils (22) und (21) ermöglichen, das die axialen Führungsmittel (24) aufnimmt, wodurch der einfache Austausch der Lager (21) und die mögliche Anpassung anderer Systeme zur Führung des Werkstücks ermöglicht wird, ohne dass die Spindel selbst modifiziert werden muss.

5. Bearbeitungseinheit nach den vorhergehenden Ansprüchen, **dadurch gekennzeichnet, dass** in dem Rotor drei werkzeugtragende Achsen (4a, 4b, 4c) montiert sind, alle identisch, wobei an jedem Ende außerhalb der Spindel ein Sechskant (4g, 4h, 4i) die Montage unterschiedlicher Schneidwerkzeughalter (5a, 5b, 5c) ermöglicht.

6. Bearbeitungseinheit mit rotierendem Kopf nach Anspruch 1, wobei jeder hebelförmige hintere Teil (4j, 4k, 4l) den Helixabschnitt (4d, 4e, 4f) trägt, der mit der Steuerhülse (14) in Kontakt kommt.

7. Bearbeitungseinheit mit rotierendem Kopf nach den vorhergehenden Ansprüchen, **dadurch gekennzeichnet, dass** jede Achse radial durch zwei Nadellager (6a, 6b, 6c) und (7a, 7b, 7c) getragen wird, wobei das Axialspiel mit den Elementen (8a, 8b, 8c) eingestellt wird.

8. Bearbeitungseinheit mir rotierendem Kopf nach den vorhergehenden Ansprüchen, **dadurch gekennzeichnet, dass** die axiale Bewegung der Steuerstangen (10a, 10b) auf die Spule (11) übertragen wird und dass das Lagerpaar (9) die Verbindung zwischen der nicht rotierenden Spule (11) und der rotierenden Steuerhülse (14) herstellt, die auf dem Ende des Rotors (1) gleitet und sich mit diesem dreht.

9. Bearbeitungseinheit mit rotierendem Kopf nach Anspruch 8, **dadurch gekennzeichnet, dass** die Rotationssteuerhülse (14) über den Riemen (16) und die Riemenscheibe (15) einen eigenen Rotationsantrieb aufweist und dass drei Stifte (17a, 17b, 17c) mit der Riemenscheibe (15) und der Hülse (14) verbunden sind und in einem Winkel von 120° zueinander angeordnet sind.

10. Bearbeitungseinheit mit rotierendem Kopf nach Anspruch 1, **dadurch gekennzeichnet, dass** die Mittel zum Bewegen der Steuerhülse (14) zwei Stangen (10a und 10b) umfassen, die von einem Linearaktuator angetrieben werden, der von dem Rahmen, der den Bearbeitungskopf trägt, zurückversetzt montiert ist.

11. Bearbeitungseinheit mit rotierendem Kopf nach Anspruch 10, **dadurch gekennzeichnet, dass** die besagten beiden Stangen über zwei vorgespannte Schrägkugellager (9) auf ein an der Steuerhülse (14) montiertes Gehäuse (12) wirken.

## Claims

1. Rotary head machining unit that carries at least two pivoting tools to machine a non-rotary part centered on the rotational axis of the rotary head, including a frame (2) on which a rotor (1) is mounted, carried by two external bearings (3), said rotor (1) having an axial channel and, coupled to rotational drive means (12) and (15), axial guiding means for said non-rotary part (22) and (24), these means being carried by bearings (21) in rotor (1) and by fixed support (23), means for holding and moving said non-rotary part axially, at least two tool holders (4a-4c) mounted in said rotary head in order to pivot about respective axes parallel to the rotational axis, each holder comprising a control lever (4j-4l) arranged transversally, pivoting control means cooperating with said lever and comprising a control element (14) that is movable in axial translation in the rotor and coupled to a translation control device, and pairs of pusher elements arranged respectively on each control lever and on the corresponding control element, each pair of pusher elements comprising a guiding surface (4d-4f) and a pushing surface (20) resting against the guiding surface in a position that varies according to the translation of said control element (14), said guiding surface (4d-4f) being located on the tool holder and the corresponding pushing surface (20) being located on the control element (14), and every guiding surface corresponding to a pivoting tool holder having the shape of a helix portion whose axis coincides with the pivoting axis of said holder, **characterized in that** it comprises a control bush (14) mounted coaxially on said spindle, said bush (14) being arranged to slide axially and to be in a first advanced position, in a second retracted position, said control bush (14) carrying at one of its ends a control surface with an ellipsoidal shape (20) arranged to cooperate with helical guiding surfaces (4d-4f) and to make the tools plunge, means for moving said control bush (14) axially and a phase shift device arranged to bring said control bush (14) in two, three or four predetermined angular positions about its axis.

2. Rotary head machining unit according to claim 1, **characterized in that** the phase shift system is made of two separate drive motors (27) and (29), one for rotor (1) by means of pulley (28), belt (13) and pulley (12), the other for bush (14) by means of pulley (30), belt (16) and pulley (15), each motor being equipped with a system to measure its angular position.

3. Rotary head machining unit according to claims 1 and 2, **characterized in that** it includes numerical control means that allow controlling both motors in order to ensure a perfectly synchronous rotation, but it also allows commanding any angular phase shift of one with respect to the other during the rotation.

4. Machining unit according to claims 1 and 2, **characterized in that** it includes means that allow a complete change of central section (22) and (21) receiving axial guiding means (24), thus allowing the easy replacement of bearings (21) and the possible adaptation of other guiding systems for the part to be machined, without having to modify the spindle itself.

5. Machining unit according to the preceding claims, **characterized in that** three tool holder axes (4a, 4b, 4c) are mounted in the rotor, all being identical, wherein a hexagon (4g, 4h, 4i) located on each end outside of the spindle allows mounting various cutting tool carriers (5a, 5b, 5c).

6. Rotary head machining unit according to claim 1, wherein every lever-shaped rear section (4j, 4k, 4l) carries helix portion (4d, 4e, 4f) that will be in contact with control bush (14).

7. Rotary head machining unit according to the preceding claims, **characterized in that** every axis is supported radially by two needle bearings (6a, 6b, 6c) and (7a, 7b, 7c); the axial play being adjusted with elements (8a, 8b, 8c).

8. Rotary head machining unit according to the preceding claims, **characterized in that** the axial movement of control rods (10a, 10b) is transmitted to spool (11) and **in that** the pair of bearings (9) connects non-rotary spool (11) and rotary control bush (14), which slides on the shank of rotor (1) and turns with it.

9. Rotary head machining unit according to claim 8, **characterized in that** rotary control bush (14) has its own rotational drive by means of belt (16) and pulley (15) and **in that** three pins (17a, 17b, 17c) are integral with pulley (15) and bush (14) and located at 120° from each other.

10. Rotary head machining unit according to claim 1, **characterized in that** the means for moving control bush (14) comprise two rods (10a and 10b) driven by a linear actuator mounted in a set back manner in relation to the frame carrying the machining head.

11. Rotary head machining unit according to claim 10, **characterized in that** said two rods act on a box (12) mounted on control bush (14) by means of two preloaded angular contact ball bearings (9).
